# FASCICULE DE BREVET EUROPEEN

(11) **EP 0 711 427 B1**
(45) Date de publication et mention de la délivrance du brevet: **12.11.1997**
(21) Numéro de dépôt: 94923749.9
(22) Date de dépôt: 27.07.1994
(51) Int. Cl.: G03D 15/00

(54) **APPAREIL DE RECONNAISSANCE D'INFORMATIONS PORTEES SUR DES OBJETS**
GERÄT ZUM ERKENNEN VON INFORMATIONEN AUF GEGENSTÄNDEN
OBJECT-BORNE DATA RECOGNITION APPARATUS

(30) Priorité: 27.07.1993 FR 9309217
(43) Date de publication de la demande: 15.05.1996
(73) Titulaire: AUTOMATISME NOUVEAU ORGANISATION, 78420 Carrières-sur-Seine (FR); Cailbault, Christian Jean Gérard, F-85100 Le Château d'Olonne (FR)
(72) Inventeur: CAILBAULT, Christian, Jean, Gérard, F-85100 Le Château d'Olonne (FR)
(74) Mandataire: CABINET BONNET-THIRION
(86) Numéro de dépôt international: FR9400946
(87) Numéro de publication internationale: WO9504304

(56) Documents cités:
- EP-A- 0 296 991
- DE-A- 2 526 639

## Description

L'invention concerne un appareil de reconnaissance d'informations portées sur des objets tels que par exemple des pochettes ou enveloppes, lesdites informations pouvant consister par exemple en des croix ou autres signes portés dans des cases pour représenter un certain nombre d'instructions. L'appareil s'applique notamment à la saisie automatique des instructions concernant le développement de films photographiques, lorsque le film est livré au laboratoire dans une pochette sur laquelle ont été portées lesdites inscriptions.

Dans un laboratoire de développement de films photographiques, par exemple, de nombreuses pochettes renfermant chacune un film à développer sont reçues chaque jour; les pochettes doivent avant tout être triées et regroupées en fonction des caractéristiques de développement souhaitées par les clients. Ces caractéristiques sont typiquement le format du tirage, le nombre d'exemplaires, l'état de surface du papier: mat ou brillant, etc... D'autres informations doivent être prises en compte pour le développement, telle que la sensibilité du film, son format, etc... On sait que de telles informations sont portées sur les pochettes d'expédition des films. Ces pochettes présentent une surface imprimée dont la configuration est généralement caractéristique du commerçant chez lequel le client a déposé son film. Cependant, chacune de ces pochettes comporte au moins une zone de lecture sur laquelle sont imprimées un certain nombre de cases destinées à être "cochées" de façon manuscrite pour indiquer un certain nombre de caractéristiques de développement souhaitées. Cette zone de lecture peut être placée n'importe où sur la surface imprimée de la pochette. Celle-ci peut aussi porter une inscription en code à barres représentant d'autres informations.

L'invention propose un appareil de reconnaissance automatique des informations portées sur des objets comme par exemple des pochettes ou enveloppes renfermant un produit à traiter. L'idée de base de l'invention consiste notamment à saisir globalement la zone de lecture grâce à des moyens de prise de vue comme par exemple une caméra vidéo. Des moyens de mémorisation sont prévus pour enregistrer une image de la zone de lecture de chaque objet de façon à pouvoir ensuite analyser cette image et en extraire les informations telles que celles qui sont données par la présence de croix ou autres signes dans des cases imprimées à cet effet sur ladite zone de lecture.

Plus précisément, l'invention concerne un appareil de reconnaissance d'informations portées sur des objets tels que des pochettes ou enveloppes, du type comprenant un convoyeur sur lequel sont placés lesdits objets et des sous-ensembles d'identification disposés en regard dudit convoyeur, lesdits objets comprenant chacun une surface imprimée présentant une zone de lecture où sont portées des informations à reconnaître, un premier sous-ensemble constitué par un lecteur d'une information portée par l'objet et spécifique de son état et un second sous-ensemble constitué par des moyens de prise de vue mobiles, ledit premier sous-ensemble étant situé en amont dudit second sous-ensemble relativement au sens de défilement desdits objets sur ledit convoyeur, charactérisé en ce qu'il comporte en outre des moyens de commande dudit second sous-ensemble, pilotés par ledit premier sous-ensemble, lesdits moyens de prise de vue étant mobiles sous le contrôle desdits moyens de commande.

Ainsi, selon un mode de réalisation préféré de l'invention, l'inscription en code à barres qui renferme des informations sur la position de la zone de lecture commande est lue par un lecteur d'informations en code à barres, constituant ledit premier sous-ensemble. Celui-ci pilote un mouvement des moyens de prise de vue permettant de centrer la prise de vue précisément sur la zone de lecture, ce qui donne une meilleure définition en pixels de celle-ci et augmente donc la fiabilité de la reconnaissance des informations qui y sont portées. En outre, le lecteur d'informations en code à barres placé en amont des moyens de prise de vue, permet de déterminer avec précision l'instant de mémorisation de l'image fournie par lesdits moyens de prise de vue (la caméra). On peut de cette façon augmenter sensiblement la cadence de lecture.

L'invention sera mieux comprise et d'autres avantages de celle-ci apparaîtront plus clairement à la lumière de la description qui va suivre d'un appareil de reconnaissance d'informations conforme à son principe, donnée uniquement à titre d'exemple et faite en référence aux dessins annexés dans lesquels:

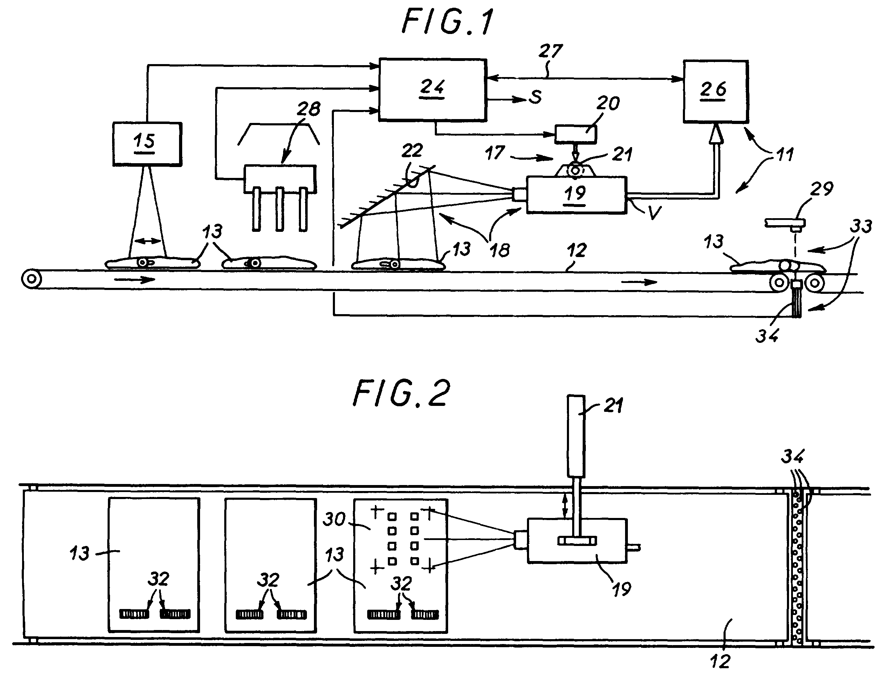

- la figure 1 est une vue schématique d'un appareil de reconnaissance d'informations conforme à l'invention;
- la figure 2 est une vue de dessus du convoyeur de l'appareil et des moyens de prise de vue; et
- la figure 3 représente une configuration d'informations à reconnaître, sur une pochette.

L'appareil de reconnaissance d'informations 11 tel que décrit comprend un convoyeur horizontal 12 sur lequel on place les objets 13 et un certain nombre de sous-ensembles d'identification disposés en regard du convoyeur, plus précisément au-dessus de celui-ci. Parmi ceux-ci, on distingue notamment un premier sous-ensemble 15 qui est ici constitué par un lecteur d'informations en code à barres et un second sous-ensemble 17 qui comprend principalement des moyens de prise de vue mobiles 18. Ces derniers comprennent une caméra 19 à positionnement réglable sous le contrôle d'une unité de servocommande 20 pilotant un vérin 21 lui-même couplé à la caméra pour la déplacer. La prise de vue se fait par l'intermédiaire d'un miroir 22. L'unité de servocommande est pilotée par l'unité centrale 24 d'un système informatique, connectée pour recevoir les signaux émis par les différents sous-ensembles et pour traiter ces signaux. La sortie vidéo V de la caméra 19 est également couplée à une mémoire d'image 26. L'inscription en mémoire est pilotée par l'unité centrale (liaison 27). Ainsi, l'unité centrale 24 et l'unité de servocommande 20 constituent des moyens de commande de déplacement du second sous-ensemble.

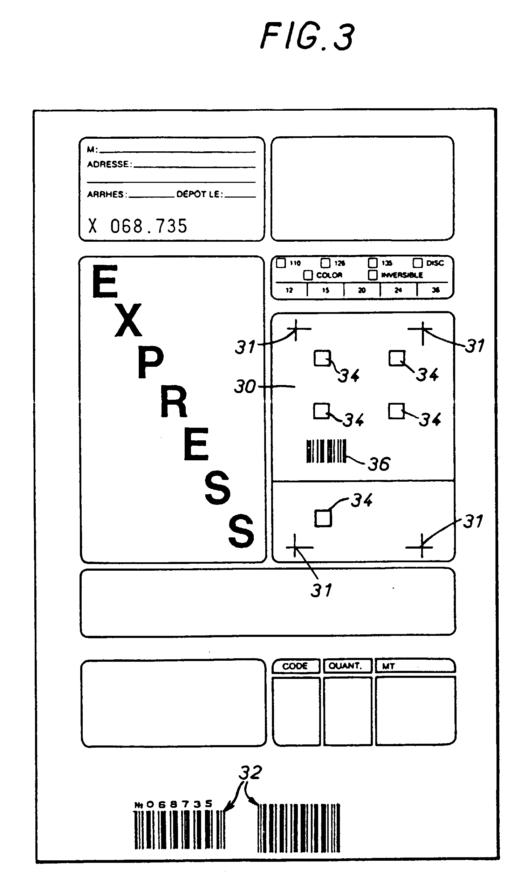

Pour une mise en oeuvre correcte de l'appareil, il convient de noter que les objets, en l'occurrence ici des pochettes renfermant des films photographiques ou analogues, (figure 3) comportent une surface imprimée présentant, d'une part, une zone de lecture 30 où sont portées des informations à reconnaître et, d'autre part, des informations en code à barres 32 renfermant notamment des données sur la position de ladite zone de lecture 30.

A titre d'exemple, la figure 3 représente la configuration imprimée d'une telle pochette où l'on reconnaît la zone de lecture 30, plus particulièrement délimitée à l'intérieur d'une surface rectangulaire dont les angles sont marqués par des repères 31 asymétriques et les informations en code à barres 32 le long d'un côté de la pochette. Ces informations sont spécifiques de l'origine de la pochette. Suivant l'origine de cette pochette, ladite zone de lecture 30 peut être placée en n'importe quel endroit à la surface de la pochette. Cette zone de lecture 30 comporte néanmoins toujours un certain nombre de cases 34 destinées à être marquées d'une croix par le client, pour exprimer ses choix, tels que le nombre d'exemplaires, le format, l'aspect mat ou brillant, etc...

Selon une caractéristique importante de l'invention, le premier sous-ensemble 15 qui est situé en amont dudit second sous-ensemble 17, relativement au sens de défilement des objets sur le convoyeur 12, pilote des moyens de commande du second sous-ensemble 17, (en l'occurrence ici constitués par l'unité centrale et l'unité de servocommande) pour déplacer et/ou orienter les moyens de prise de vue.

Ainsi, la caméra 19 est déplacée en réponse aux informations données par ledit premier sous-ensemble (ici le lecteur d'informations en code à barres) pour se positionner correctement vis-à-vis de la zone de lecture 30 de l'enveloppe correspondante, afin que l'image de cette zone de lecture bénéficie d'une définition maximum. La lecture des informations en code à barres permet aussi de synchroniser la prise de vue puisque la distance entre le lecteur 15 et l'emplacement de prise de vue est connu. C'est donc l'ordre émis par le lecteur 15 qui, par l'intermédiaire de l'unité centrale 24, déclenche l'inscription en mémoire 26, au moment voulu, de l'image élaborée par la caméra 19. Autrement dit, les moyens de commande définis ci-dessus sont connectés pour piloter des moyens de mise en mémoire d'une image délivrée par la caméra 19 à un instant déterminé en fonction des informations lues par ledit premier sous-ensemble.

Par ailleurs, l'appareil est complété par un troisième sous-ensemble d'identification 28 constitué par une unité d'analyse de couleurs, connue en soi. Dans l'exemple, cette unité d'analyse de couleurs, munie de trois détecteurs Bleu, Vert, Rouge, est aussi placée en amont desdits moyens de prise de vue. Elle comprend des moyens d'analyse spectrométrique des couleurs figurant sur la pochette. On peut considérer qu'une telle analyse spectrométrique de couleurs est représentative du type de pochette, donc de la position de la zone de lecture sur celle-ci. Par conséquent, ce sous-ensemble d'identification 28 émet des informations qui viennent confirmer celles du lecteur d'informations en code à barres. Lesdites informations sont adressées à l'unité centrale. Il est à noter que, dans le cas où la pochette ne comporte pas d'informations en code à barres exploitables, l'unité d'analyse de couleurs peut être utilisée en tant que premier sous-ensemble défini ci-dessus pour piloter le positionnement des moyens de prises de vue.

Enfin, le dispositif comporte un quatrième sous-ensemble d'identification 33 constitué par des moyens de reconnaissance de forme. Ces derniers comprennent un émetteur infrarouge 29 et des récepteurs infrarouges 34 agencés selon au moins une ligne (en l'occurrence ici deux lignes côte-à-côte) orientée transversalement par rapport au convoyeur 12. Le défilement de la pochette au-dessus des récepteurs provoque des variations d'absorption d'infrarouges qui sont exploitées par l'unité centrale 24 pour reconnaître le type d'objet enfermé dans la pochette.

Dans l'exemple, encore, ce quatrième sous-ensemble d'identification vient apporter une confirmation des informations reconnues par les sous-ensembles précédemment décrits mais il est à noter que, si ce quatrième sous-ensemble est placé en amont des moyens de prise de vue, il peut aussi servir à piloter la mise au point de la caméra, (ce qui peut s'avérer utile compte tenu des épaisseurs variables des objets qui peuvent se trouver dans les pochettes) assurant ainsi une plus grande netteté de l'image vidéo mise en mémoire.

Selon une variante, l'unité de servocommande peut agir sur l'orientation du miroir 22 optiquement intercalé entre l'emplacement où passe la pochette 13 à analyser et l'objectif de la caméra 19.

Ainsi, toutes les informations délivrées par les différents sous-ensembles sont traitées par l'unité centrale 24 qui délivre, à sa sortie S, une série d'informations nécessaires au traitement ultérieur de l'objet. On peut ainsi mettre en oeuvre, en aval, des moyens de tri automatique, pilotés par ces informations, permettant d'orienter convenablement les objets.

D'autres perfectionnements sont possibles. Par exemple, au cours de l'analyse faite par l'unité centrale 24, de l'image disponible dans la mémoire, les distances entre les repères 31 marquant les limites de la zone de lecture, sont mesurées et comparées à des valeurs de référence. Les écarts possibles en raison du fait que la surface de la pochette n'est pas plane mais déformée par ce qu'elle contient, sont exploités pour opérer un "redressement" de l'image permettant de mieux localiser l'emplacement des cases où le client a porté un certain nombre de croix représentatives de ses choix. De même, comme représenté, la zone de lecture 30 elle-même peut comporter d'autres informations en code à barres 36 qui sont enregistrées dans la mémoire image 26 et analysées ensuite par l'unité centrale 24. De telles informations permettent d'améliorer encore la reconnaissance de la grille spécifique de la zone de lecture à analyser.

## Revendications

1. Appareil de reconnaissance d'informations portées sur des objets tels que des pochettes ou enveloppes (13), du type comprenant un convoyeur (12) sur lequel sont placés lesdits objets et des sous-ensembles d'identification disposés en regard dudit convoyeur, dans lequel lesdits objets comprenant chacun une surface imprimée présentant une zone de lecture (30) où sont portées des informations à reconnaître, un premier sous-ensemble (15) constitué par un lecteur d'une information portée par l'objet et spécifique de son état et un second sous-ensemble (17) constitué par des moyens de prise de vue mobiles, ledit premier sous-ensemble étant situé en amont dudit second sous-ensemble relativement au sens de défilement desdits objets sur ledit convoyeur, caractérisé en ce qu'il comporte en outre des moyens de commande (24, 20, 21) dudit second sous-ensemble, pilotés par ledit premier sous-ensemble, lesdits moyens de prise de vue (18) étant mobiles sous le contrôle desdits moyens de commande.

2. Appareil selon la revendication 1, caractérisé en ce que ladite surface imprimée portant des informations en code à barres (32), ledit premier sous-ensemble est un lecteur de code à barres (15).

3. Appareil selon la revendication 1, caractérisé en ce que ledit premier sous-ensemble est constitué par une unité d'analyse de couleurs (28).

4. Appareil selon l'une des revendications précédentes, caractérisé en ce que lesdits moyens de commande sont connectés pour piloter des moyens de mise en mémoire (26) d'une image délivrée par lesdits moyens de prise de vue, à un instant déterminé en fonction des informations lues par ledit premier sous-ensemble (15-28).

5. Appareil selon la revendication 2, caractérisé en ce qu'il comporte un troisième sous-ensemble d'identification constitué par une unité d'analyse de couleurs (28).

6. Appareil selon la revendication 5, caractérisé en ce que ladite unité d'analyse de couleurs (28) est placée en amont desdits moyens de prise de vue.

7. Appareil selon l'une des revendications précédentes, caractérisé en ce qu'il comporte un quatrième sous-ensemble d'identification constitué par des moyens de reconnaissance de forme (33).

8. Appareil selon la revendication 7, caractérisé en ce que ces moyens de reconnaissance de forme comprennent un ensemble de récepteurs infrarouges (34) agencés selon au moins une ligne orientée transversalement par rapport audit convoyeur.

## Patentansprüche

1. Gerät zum Erkennen von Informationen auf Gegenständen, wie Taschen oder Hüllen (13), mit folgenden Merkmalen:
ein Förderer (12), auf dem die Gegenstände liegen;
Identifikationsuntereinheiten, die mit Bezug auf den Förderer angeordnet sind;
die Gegenstände weisen jeweils eine bedruckte Oberfläche auf, die eine Lesezone (30) darstellt, in welcher die zu erkennenden Informationen enthalten sind;
eine erste Untereinheit (15) wird durch eine Leseeinrichtung der Information auf dem Gegenstand gebildet, die hinsichtlich ihres Zustandes spezifisch ist, und eine zweite Untereinheit (17) wird durch eine bewegliche Sichteinrichtung gebildet, wobei die erste Untereinheit vor der zweiten Untereinheit relativ zur Förderrichtung der Gegenstände auf dem Förderer angeordnet ist,
dadurch gekennzeichnet,
daß noch Steuereinrichtungen (24, 20, 21) der zweiten Untereinheit vorgesehen sind, die von der ersten Untereinheit gesteuert werden, und
daß die Sichteinrichtung (18) unter der Steuerung der Steuereinrichtungen verschiebbar ist.

2. Gerät nach Anspruch 1,
dadurch gekennzeichnet, daß die bedruckte Oberfläche Informationen als Strichcode (32) trägt, und daß die erste Untereinheit einen Strichcodeleser (15) darstellt.

3. Gerät nach Anspruch 1,
dadurch gekennzeichnet, daß die erste Untereinheit durch eine Analyseeinheit für Farben (28) gebildet wird.

4. Gerät nach einem der vorhergehenden Ansprüche,
dadurch gekennzeichnet, daß die Steuereinrichtungen zur Steuerung von Speichern (26) zu deren Ingangsetzen angeschlossen sind, und zwar zur Speicherung eines von der Sichteinrichtung gelieferten Bildes zu einem Augenblick, der in Abhängigkeit der von der ersten Untereinheit (15 bis 28) ausgelesenen Information bestimmt wird.

5. Gerät nach Anspruch 2,
dadurch gekennzeichnet, daß es eine dritte Identifkationsuntereinheit umfaßt, die durch eine Farbanalyseneinheit (28) gebildet wird.

6. Gerät nach Anspruch 5,
dadurch gekennzeichnet, daß die Farbanalyseneinheit (28) in Förderrichtung vor der Sichteinrichtung angeordnet ist.

7. Gerät nach einem der vorhergehenden Ansprüche,
dadurch gekennzeichnet, daß es eine vierte Identifikationsuntereinheit umfaßt, die durch eine Einrichtung zur Erkennung von Formen (33) gebildet wird.

8. Gerät nach Anspruch 7,
dadurch gekennzeichnet, daß die Formerkennungseinrichtung eine Anordnung von Infrarotempfängern (34) umfaßt, die mindestens gemäß einer Linie angeordnet sind, die quer zum Förderer verläuft.

## Claims

1. Apparatus for the recognition of information carried by articles such as small bags or envelopes (13), of the type comprising a conveyor (12) on which said articles are placed and identification sub-assemblies disposed facing said conveyor, in which said articles each comprise a printed surface having a reading zone (30) where items of information to be recognised are carried, a first sub-assembly (15) formed by a reader for reading an item of information carried by the article and specific to its state and a second sub-assembly (17) formed by movable viewing means, said first sub-assembly being disposed upstream of said second sub-assembly relative to the direction of movement of said articles on said conveyor, characterised in that it further comprises means (24, 20, 21) for controlling said second sub-assesmbly, said control means being piloted by said first sub-assembly, said viewing means (18) being movable under the control of said control means.

2. Apparatus according to claim 1 characterised in that said printed surface bearing items of information in bar code form (32), said first sub-assembly is a bar code reader (15).

3. Apparatus according to claim 1 characterised in that said first sub-assembly is formed by a colour analysis unit (28).

4. Apparatus according to one of the preceding claims characterised in that said control means are connected for pilot control of the memory means (26) for an image delivered by said viewing means at a given time in dependence on the information read by said first sub-assembly (15-28).

5. Apparatus according to claim 2 characterised in that it comprises a third identification sub-assembly formed by a colour analysis unit (28).

6. Apparatus according to claim 5 characterised in that said colour analysis unit (28) is disposed upstream of said viewing means.

7. Apparatus according to one of the preceding claims characterised in that it comprises a fourth identification sub-assembly formed by shape recognition means (33).

8. Apparatus according to claim 7 characterised in that said shape recognition means comprise an assembly of infra-red receivers (38) arranged in at least one line which is oriented transversely with respect to said conveyor.
